# FASCICULE DE BREVET EUROPEEN

(11) **EP 3 037 802 B1**
(45) Date de publication et mention de la délivrance du brevet: **28.06.2017**
(21) Numéro de dépôt: 15202167.1
(22) Date de dépôt: 22.12.2015
(51) Int. Cl.: G01N 3/56

(54) **ACTIONNEUR POUR ESSAI DANS UN LIQUIDE SOUS HAUTE PRESSION**
STELLGLIED FÜR TEST IN EINER FLÜSSIGKEIT UNTER HOCHDRUCK
ACTUATOR FOR A TEST IN A HIGH-PRESSURE LIQUID

(30) Priorité: 23.12.2014 FR 1463240
(43) Date de publication de la demande: 29.06.2016
(73) Titulaire: COMMISSARIAT À L'ÉNERGIE ATOMIQUE ET AUX ÉNERGIES ALTERNATIVES, 75015 Paris (FR)
(72) Inventeur: JONQUERES, Nicolas, 92120 Montrouge (FR)
(74) Mandataire: Regimbeau

(56) Documents cités:
- DE-A1- 10 323 441
- GB-A- 2 495 800
- US-A1- 2007 241 620
- US-B2- 8 662 187

## Description

### DOMAINE TECHNIQUE GENERAL

L'invention concerne les machines pour essais d'usure d'échantillons (aussi appelés éprouvettes) dans le domaine du nucléaire, notamment pour des simulations de frottements et de chocs de tube(s) contre des supports représentatifs de géométries rencontrées dans des réacteurs nucléaires. En particulier, la machine doit pouvoir être utilisée pour des essais dans des fluides sous haute pression (plus de 100 bars - 150 bars par exemple) et haute température (plus de 300°C - 320°C par exemple), correspondant aux conditions existantes dans un réacteur nucléaire et doit pouvoir effectuer des mouvements dans un plan.

Les essais d'usure nécessitent d'appliquer à l'éprouvette des efforts de placage, de l'ordre du Newton à la dizaine de Newton, et des efforts d'impact, de l'ordre la centaine de Newton.

Les précisions exigées sont de l'ordre du Newton pour la maîtrise des efforts et de l'ordre du micromètre pour la maîtrise du déplacement.

### ETAT DE L'ART

Pour effectuer ces essais, l'on dispose d'une machine et d'une enceinte sous pression dans laquelle se trouve l'éprouvette.
La machine d'essais d'usure comprend donc un actionneur permettant d'imprimer le mouvement nécessaire à l'éprouvette. L'éprouvette étant nécessairement dans le milieu sous haute pression et température, il apparaît plusieurs configurations possibles pour la conception de l'actionneur intégré à la machine d'essais d'usure.
L'état de la technique comprend des actionneurs disposés hors ou partiellement hors de l'enceinte où s'effectue l'essai.

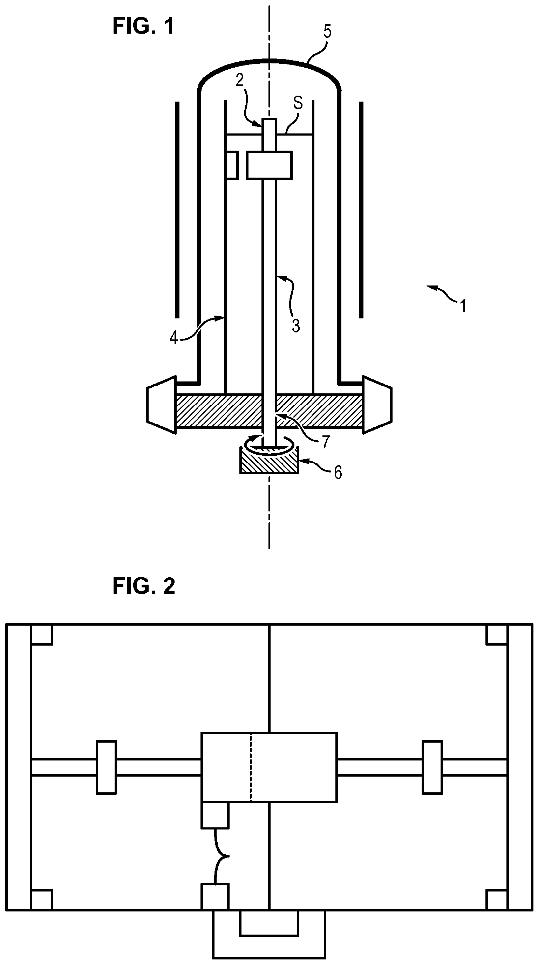

Une première catégorie de ces actionneurs connus comprend les actionneurs essentiellement mécaniques. Sur la **figure 1****,** un actionneur 1 entraînant une éprouvette 2 par un arbre 3 est représenté. L'éprouvette 2 vient choquer ou frotter sur un support S tenu par un bâti 4. L'ensemble est positionné dans une enceinte 5 sous pression de fluide et haute température. Le générateur d'effort 6 est quant à lui situé hors de l'enceinte 5, ce qui signifie que l'arbre 3 traverse la paroi du bâti 4. Des joints 7 sont nécessaires pour garantir l'étanchéité. Le générateur d'effort 6 peut être composé de masselottes excentrées et entrainées en rotation par des moteurs.
A cause des conditions de température, de pression et de la distance entre la génération de l'effort et son exercice, la fonction de transfert ne peut être connue précisément notamment à cause des effets suivants : matériau de l'arbre et traversée de la paroi soumis à des variations de températures et de pressions (influant notamment sur la raideur de la traversée), effets de l'amplitude du mouvement jouant de manière non linéaire sur la traversée, contrôle du mouvement de manière indirecte par contrôle des masselottes, « bruit mécanique », etc... La répétabilité des essais est ainsi compromise. De plus, de tels actionneurs 1 ne sont pas adaptés pour effectuer des mouvements dans un plan car ils jouent sur le débattement angulaire de l'arbre 3 et posent des problèmes d'étanchéité. Or, il serait souhaitable d'obtenir un actionneur autorisant de tels mouvements.
De plus, la mise en mouvement se faisant par l'intermédiaire de l'arbre 3 qui est une tige élancée, le mouvement est une résultante du mouvement imprimé par l'actionneur 1 et de l'effet dynamique vibratoire jouant sur la relative souplesse de l'arbre. L'éloignement entre l'actionneur 1 et la zone d'essai où est placée l'éprouvette 2 est donc contradictoire avec les impératifs de maîtrise du mouvement et des efforts.

Une deuxième catégorie de ces actionneurs connus comprend des actionneurs électromagnétiques, comprenant un bâti (stator ou carter de faible reluctance) avec une partie creuse, un aimant permanent générant un champ magnétique, et une bobine à l'intérieur du bâti pouvant coulisser en translation du fait des forces de Laplace, proportionnelles au courant circulant dans la bobine. Le stator est situé à l'extérieur de l'enceinte et l'entrefer, c'est-à-dire la zone entre l'aimant et le carter, là où est positionnée la bobine, comprend aussi en son sein la paroi de l'enceinte supportant la pression. La bobine, quant à elle, est située à l'intérieur de l'enceinte. Du fait de l'entrefer important, les pertes de champ magnétique sont importantes, ce qui contraint à surdimensionner l'actionneur, limite les dynamiques possibles et complique la maîtrise du mouvement de l'éprouvette. De plus, l'éprouvette est éloignée du lieu de génération de l'effort à cause du volume nécessaire hors de l'enceinte pour le positionnement du stator, ce qui génère des imprécisions pour la répétabilité du mouvement la rigueur des mesures. L'éloignement est pénalisant notamment car les pièces liant la partie mobile de l'actionneur avec l'échantillon doivent avoir un certain élancement contradictoire avec les impératifs de rigidité, cet élancement aussi rajoute de la masse à l'équipage mobile contradictoire avec les qualités dynamiques recherchées.

Ainsi se soustraire à la pression environnante peut se faire soit en mettant l'actionneur complètement dehors, avec l'ajout de contraintes de devoir traverser l'enceinte sous pression et d'augmenter la distance entre la zone d'essai et la zone de transformation de l'énergie généralement sous forme électrique en énergie mécanique. Une autre manière consiste à inclure la partie mobile de l'actionneur dans l'enceinte, avec encore l'inconvénient de la distance entre la zone de transformation de l'énergie et une contrainte de devoir transmettre l'énergie à travers l'enceinte tenant la pression.
La distance entre la zone de transformation de l'énergie et la zone de l'essai est une contrainte forte pour une machine générant des vibrations. Pour contrer la sensibilité aux vibrations qui sont néfastes à la maîtrise du mouvement ou de l'effort, on peut vouloir augmenter la rigidité des pièces, et augmenter en conséquence leur masse, ce qui va à l'encontre d'obtenir de bonnes capacités de mise en mouvement avec des dynamiques élevées propres à une machine générant des vibrations.

Il n'existe actuellement pas d'actionneurs permettant de travailler sous haute pression et température de façon pleinement satisfaisante.

On pourrait imaginer d'utiliser un actionneur « haute-pression », en le coffrant de manière étanche puis en immergeant le volume étanche dans l'enceinte. A titre de complète information, cette solution existe dans un domaine technique totalement différent de celui de l'invention, celui de la génération d'ondes sismique sous-marines. Le document GB2495800 décrit ainsi un élément de source vibro-acoustique avec un volume étanche immergé (**figure 2**). Deux ouvertures sont prévues et deux pistons permettent de fermer les deux ouvertures respectives. Un système d'actionnement à l'intérieur du volume étanche actionne les pistons pour générer l'onde sismique et un système de contre-pression permet de réguler la pression du fluide à l'intérieur du volume étanche à la pression exercée dans l'enceinte. Ce dispositif permet de compenser les effets de la pression sur l'actionneur, il reste néanmoins une rigidité apportée par les joints d'étanchéité entre le fluide au sein du volume étanche et le fluide dans l'enceinte. En revanche, le système de contre-pression n'est pas adapté pour la précision exigée dans les applications concernées par la présente invention (une précision en pression du millibar sur un piston de 10 cm de diamètre donne des variations d'effort sur l'actionneur de l'ordre du Newton).

### PRESENTATION DE L'INVENTION

Il est souhaitable d'obtenir un actionneur pouvant fonctionner dans les conditions présentées précédemment, en étant au plus près de l'échantillon possible et offrant une précision suffisante pour mener les essais de façon satisfaisante.
L'invention propose à cet effet un actionneur magnétique pour mise en mouvement maîtrisé d'un d'échantillon pour analyse dans un milieu liquide sous haute pression et haute température, ou sous haute pression, comprenant :
- Un carter,
- Un aimant permanent générant un champ magnétique, l'aimant étant fixé sur le carter et comprenant un entrefer,
- Une bobine, pouvant être alimentée en courant électrique, de sorte que ladite bobine puisse se déplacer en translation dans l'entrefer selon une direction principale,
- Des moyens de supports, solidaires de la bobine, auxquels est attaché l'échantillon,
Dans lequel l'aimant et la bobine sont immergés dans le milieu liquide, de sorte que la pression du milieu s'exerce de manière isostatique sur tous les composants de l'actionneur.

L'invention peut comprendre en outre les caractéristiques suivantes, prises seules ou en combinaison :
- l'aimant et/ou la bobine est recouvert d'un revêtement spécial pour résister à la corrosion du milieu liquide,
- le carter comprend un jeu de lames souples fixé au carter et portant la bobine, ledit jeu autorisant la translation de la bobine selon la direction principale,
- le jeu de lames souples autorise la translation de la bobine selon une direction orthogonale à la direction principale, de sorte que la bobine puisse se déplacer par translation sensiblement dans un plan,
- le jeu de lames souples comprend un axe dont :
   o une première partie est une lame dont la normale est orientée selon la direction principale et
   o une deuxième partie dont la normale est orientée à 90° selon une direction orthogonale à la direction principale,
   de sorte que les parties autorisent la translation respectivement dans la direction de leur normale par souplesse des lames,
- l'entrefer selon la direction orthogonale est dimensionné pour permettre un déplacement de la bobine selon cette direction.

L'invention concerne aussi un multi-actionneur pour analyse d'échantillons dans un milieu liquide sous haute pression et haute température, comprenant au moins deux actionneurs tels que précédemment décrits, les deux actionneurs étant adaptés pour agir sur un même échantillon et étant non parallèles l'un par rapport à l'autre.

Le multi-actionneur peut comprendre les caractéristiques suivantes prises seules ou en combinaison :
- les directions principales de chacun des actionneurs sont orthogonales,
- la translation de la bobine selon la direction principale d'un actionneur provoque la translation selon la direction orthogonale à la direction principale de l'autre actionneur.

Enfin, l'invention présente une enceinte de test pour échantillon comprenant un actionneur tel que décrit précédemment ou un multi-actionneur tel que décrit précédemment, dans lequel l'enceinte est remplie de fluide sous une pression supérieure à 50 bars et d'une température supérieure à 200°C.

L'enceinte peut comprendre en outre une alimentation en fluide de température inférieure à proximité de l'actionneur ou du multi-actionneur, afin de faire baisser la température environnante et comprenant un isolant thermique permettant de limiter les échanges thermiques à proximité de l'échantillon testé.

L'enceinte peut comprendre en outre un isolant thermique permettant de limiter les échanges thermiques à proximité de l'échantillon testé, afin de faire baisser la température environnante hors de cet isolant.

L'invention permet de rapprocher au plus près l'actionneur de la zone d'essai, ce qui participe donc aux qualités de reproductibilité, aux qualités dynamiques de l'actionneur. L'invention résout par là-même les deux contraintes qui avaient été échappées par le fait de mettre l'actionneur hors de l'enceinte.

En effet, l'invention ne résout pas cette contrainte en réalisant un milieu étanche par rapport au fluide, c'est-à-dire en immergeant l'actionneur dans l'enceinte tout en ne laissant pas pénétrer le fluide au sein de l'actionneur : la contrainte haute pression génère dans ce cas des efforts importants. Ainsi vouloir isoler au sein de l'actionneur une partie différente de fluide comme dans l'invention GB2495800, ayant donc un risque de différentiel de pression, conduit soit à des efforts ne permettant pas d'obtenir une précision de l'ordre du Newton, soit à rajouter des pièces souples isolant les deux fluides mais rajoutant des raideurs au mouvement de l'actionneur rendant ses caractéristiques dynamiques mauvaises
L'invention consiste donc à ne pas chercher à lutter contre la pression en ne cherchant pas à isoler deux milieux liquides différents. Les parties de l'actionneur selon l'invention subissent de façon isostatique la pression celui-ci peut donc être situé à proximité de l'échantillon.
La contrainte haute température rajoute des problèmes liés à la tenue des matériaux. Dans le domaine spécifique des machines d'usure, on peut se soustraire à cette contrainte en ménageant autour de notre actionneur une zone constituée du même liquide que dans toute l'enceinte, donc en équipression, mais plus froide qu'au niveau de la zone d'essai.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 représente un actionneur mécanique conforme à l'art antérieur,
- La figure 2 représente un actionneur de secousse sismique sous-marine conforme à l'art antérieur,
- La figure 3 représente un schéma d'une machine d'essai d'usure comprenant un actionneur conforme à l'invention,
- La figure 4, représente un schéma de principe d'un actionneur conforme à l'invention,
- La figure 5 représente un détail d'un mode de réalisation d'un actionneur conforme à l'invention,
- La figure 6 représente un vue élargie du mode de réalisation précédent,
- La figure 7 représente un multi-actionneur avec deux actionneurs conforme à l'invention et disposés orthogonalement,
- Les figures 8a à 8c représentent un schéma du multi-actionneur précédent dans différentes configurations (dessins non à l'échelle, bobines avec une dimension longitudinale plus grande que celle du carter).

### DESCRIPTION DETAILLEE

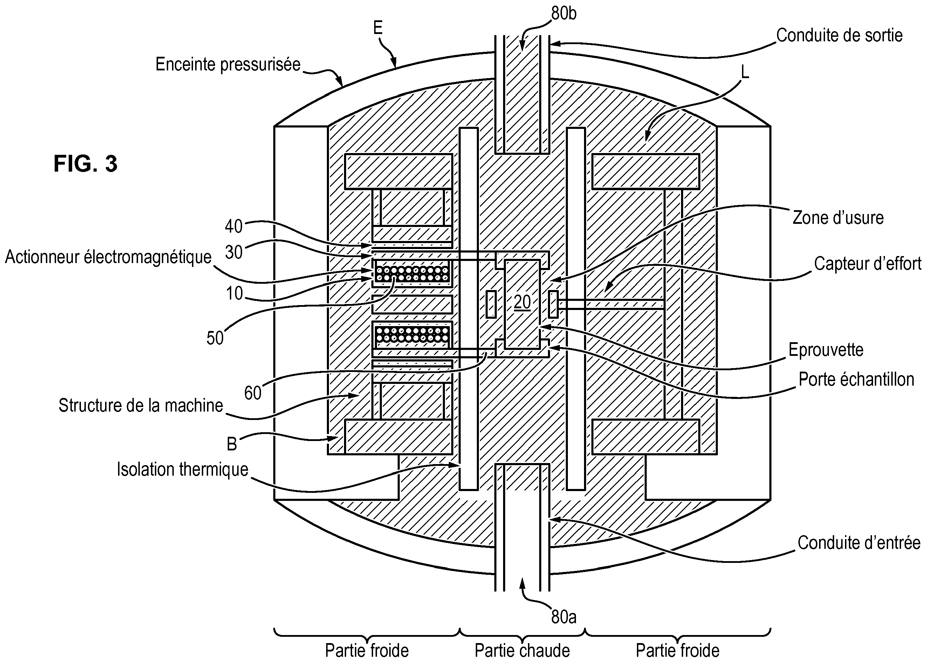

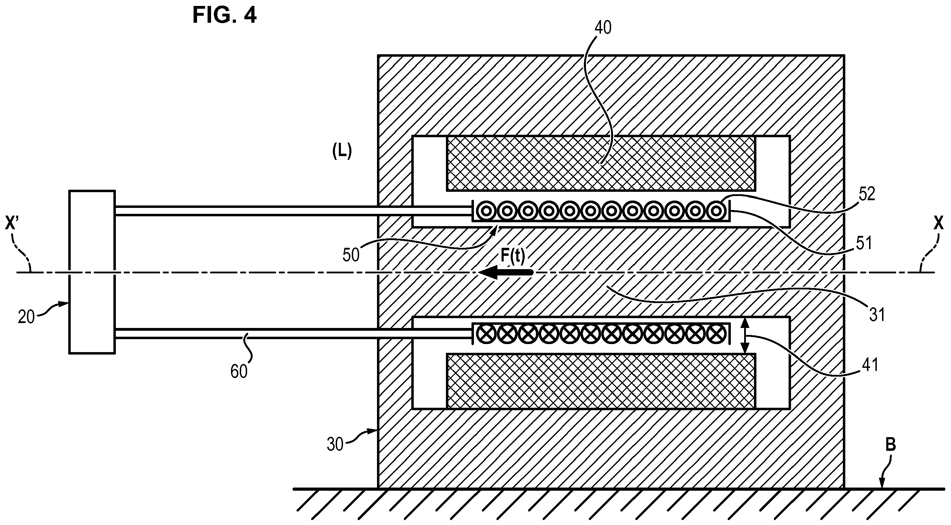

En référence aux **figures 3** **et** **4****,** un actionneur magnétique 10 conforme à l'invention est installé dans une enceinte E pour mener des essais sur un échantillon 20 dans un milieu liquide L de chimie particulière (milieu aqueux ou non, comme un métal liquide, notamment sodium liquide). Le type d'essai effectué a été explicité auparavant. Le milieu liquide entourant l'échantillon 20 est sous haute pression (plus de 50 bars, voire 100 bars et jusqu'à 155 bars) avec éventuellement une haute température (plus de 200°C, voire 300°C et jusqu'à 340°C).

L'actionneur magnétique 10 comprend un carter 30 qui supporte les autres éléments. Le carter 30, solidaire du bâti B est donc attaché à l'enceinte E.

Pour générer les forces nécessaires à l'essai sur l'échantillon 20, un aimant permanent 40 générant un champ magnétique est fixé sur le carter 30. Sous le terme d'aimant permanent 40, on peut signifier une pluralité d'aimants.
Plus précisément, le carter 30 présente une partie centrale 31 autour de laquelle sont disposés les aimants 40.
Le carter 30 possède une faible reluctance pour favoriser la transmission du champ magnétique. Notamment, le carter 30 peut être en inox magnétique (perméabilité relative µᵣ élevée). Il peut être réalisé massif ou encore par un empilement de tôles en inox magnétique, isolées électriquement entre elles et maintenues par un dispositif mécanique. Un des intérêts de l'empilement de tôles est de limiter les courants de Foucault. Néanmoins, le dispositif fonctionnant à basse fréquence, ceux-ci sont peu puissants et on peut avoir un carter 30 massif.
Le carter 30 et l'aimant 40 définissent un entrefer 41, c'est-à-dire un espace entre le carter 30 et l'aimant 40. Plus cet entrefer 41 est faible, plus les pertes de champ magnétique sont limitées ; l'entrefer 41 est néanmoins nécessaire pour le positionnement d'une bobine 50.

En effet, la bobine 50, pouvant être alimentée en courant électrique i, est disposée dans l'entrefer 41 autour de la partie centrale 31 du carter 30.
La bobine 50 est soumise au champ magnétique de l'aimant 40. Lorsqu'un courant i traverse la bobine 50, les forces de Laplace (proportionnelles à l'intensité du courant et du champ magnétique), provoquent la translation de la bobine 50 dans l'entrefer 41 selon une direction principale X-X'. Le carter 30 a un rôle de carter magnétique permettant de guider le flux du champ magnétique vers la bobine 50. L'ordre de grandeur des translations effectuées est de quelques micromètres maitrisés à quelques millimètres.
Plus précisément, la bobine 50 comprend un bobineau 51 sur lequel un ou plusieurs fils 52, par exemple en cuivre, sont enroulés en spires. Avoir plusieurs fils permet d'optimiser l'intensité du courant i et ainsi de limiter les pertes par effet Joule.
La direction principale X-X' est sensiblement orthogonale au plan défini par une spire de la bobine 50. Par conséquent, la direction orthogonale X-X' correspond à la direction longitudinale de la bobine 50.

L'aimant 30 et la bobine 50 présentent un plan de symétrie. Sur les figures, la section de la bobine 50 est rectangulaire avec des coins arrondis.

Afin de permettre une bonne précision de l'actionneur 10 quelle que soit la position de la bobine 50 le long de la direction principale X-X', la longueur de la bobine 50 selon sa direction longitudinale, c'est-à-dire selon la direction principale X-X', peut être inférieure à la longueur de l'aimant 40 dans cette même direction d'une valeur supérieure au déplacement prévu de la bobine 50, de sorte que le champ magnétique de l'aimant 40 traverse un nombre constant de spires en toute position de la bobine 50. Une autre manière de faire serait de rendre cette dimension longitudinale de la bobine 50 supérieure à la dimension de l'aimant 40 dans cette même direction d'une valeur supérieure au déplacement prévu de la bobine 50. La première solution est préférée pour limiter la masse de la bobine 50 qui doit être mise en mouvement.

Afin de transmettre les mouvements de la bobine 50 à l'échantillon 20, des moyens de support 60 sont prévus. Ils sont solidaires en translation selon la direction principale X-X' de la bobine 50 (en particulier du bobineau 51), préférablement intégralement solidaires, et l'échantillon 20 est attaché auxdits moyens 60, de façon à ce que les efforts souhaités puissent lui être transmis (des liaisons rigides, rotules, pivot, etc. peuvent convenir en fonction de l'effort souhaité).

Le milieu liquide L impose une contrainte de pression élevée (plus de 100 bars). Pour que les effets de pression ne n'opposent pas au mouvement de la bobine 50 et pour ne pas subir les mêmes pertes de champ magnétique de l'art antérieur, ni avoir un actionneur éloigné de la zone d'essai afin de gagner en rigidité et de diminuer la masse mobile, l'aimant 40, la bobine 50 et le carter 30 sont immergés directement dans le milieu liquide L, sans chercher à isoler une partie de l'actionneur du fluide. Ainsi, les forces de pression se compensent (pression s'exerçant de façon isostatique) et n'interviennent plus dans la chaîne de transmission d'effort de l'actionneur 10 vers l'échantillon 20. En effet, pour une pression de 155 bars, la simple force générée par le milieu liquide L vaut 1550 Newton sur un cm², celle-ci s'exerce de manière isostatique sur les pièces dans le milieu.
De plus, l'aimant 40 et la bobine 50 étant tous deux immergés dans le milieu liquide L, l'entrefer 41 peut être limité au jeu suffisant pour permettre la translation de la bobine 50 (en prenant en compte la résistance visqueuse de l'eau), ce qui permet de minimiser les pertes de champ magnétique.
Enfin, l'actionneur 10 étant intégralement immergé, il n'y a plus de problèmes d'étanchéité liés à la traversée d'une paroi.

L'entrefer 41 situé transversalement à la direction principale X-X' présente une dimension supérieure à la bobine 50 définissant ainsi un espace. Couplé à une bobine 50 dont la largeur est plus importante que la largeur de la partie centrale 31, cet espace autorise à la bobine un déplacement déplacer en translation selon un axe orthogonal Y-Y' à la direction principale X-X'. Le plan XY définit par ces deux axes est horizontal lorsque l'actionneur 10 est installé dans l'enceinte E.

Les moyens de support 60 sont aussi solidaires de la bobine 50 en translation selon la direction orthogonale Y-Y'. Comme mentionné précédemment, ils sont préférablement intégralement solidaires.
Ainsi, la bobine 50 possède des libertés de translations avec des composantes indépendantes selon la direction principale X-X' et l'orthogonale Y-Y' : la bobine 50 peut donc se déplacer dans le plan XY. Par solidarité avec les moyens de supports 60 et l'échantillon 20, l'actionneur 10 permet un mouvement de l'échantillon 20 dans un plan parallèle au plan XY.

Pour résister aux contraintes inhérentes au milieu liquide L (température, pression, chimie), l'actionneur 10 est fabriqué à l'aide de matériaux spéciaux.

La bobine 50 a des fils 52 isolés électriquement par un matériau tenant à la haute température ainsi qu'à la corrosion du milieu liquide. Par exemple les fils peuvent être recouverts de polyamide ou d'un de ses dérivés. Les fils ont un indice de température dans le haut de la gamme disponible (typiquement 200°C minimum). Des isolants céramiques ou verre peuvent aussi être prévus sur les câbles.

De plus, les fils 52 sont imprégnés d'une résine d'imprégnation pour solidariser les fils sur le bobineau 51 et transmettre les efforts des forces de Laplace vers le bobineau 51, qui est solidaire des moyens de supports 60. Cette résine possède aussi un indice de température élevé, correspondant à une température de transition vitreuse élevée (typiquement >150°C).
L'aimant 40 peut être recouvert d'une couche de résine similaire à celle d'imprégnation des câbles, ou de céramique ou de verre ou encore être placé dans une « cage en métal laissant transiter le champ magnétique », c'est à dire un revêtement particulier qui le protège de la corrosion sans altérer ses propriétés magnétiques.

Un mode de réalisation de fabrication de l'ensemble bobine 50 peut se faire à l'aide de fils isolés en verre et enroulés en bobinage à froid. Enfin, dans un four à haute température, le verre va fondre et servir de liant aux spires entre elles et avec le bobineau 51. Une telle bobine 50 résiste à des températures plus élevées (>250°C), pouvant éventuellement résister un milieu fluide L de sodium liquide ou d'un autre métal liquide.
Alternativement, des feuillards en inox pour maintenir les fils sont envisageables.
L'aimant 40 est déjà lié fortement au carter 30 par la seule force magnétique. Il peut aussi être collé à l'aide de la résine d'imprégnation des câbles, et/ou fixé mécaniquement au carter 30.

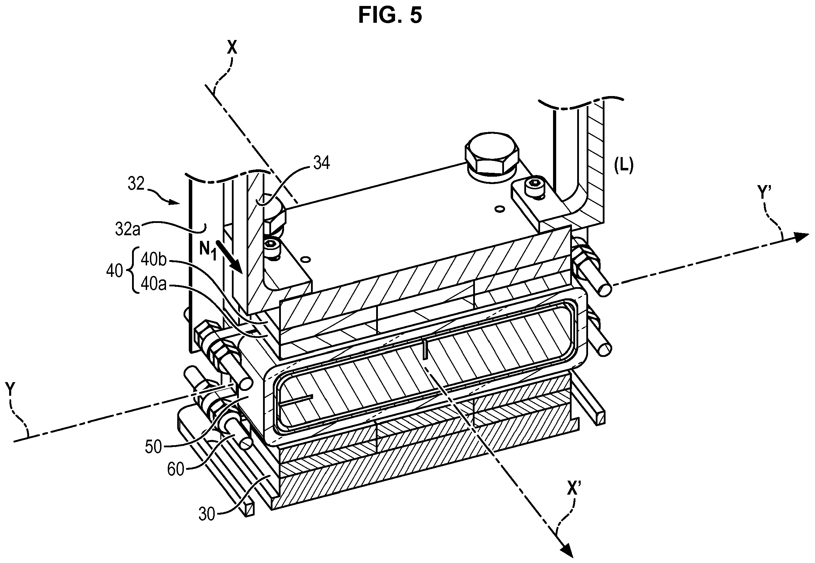

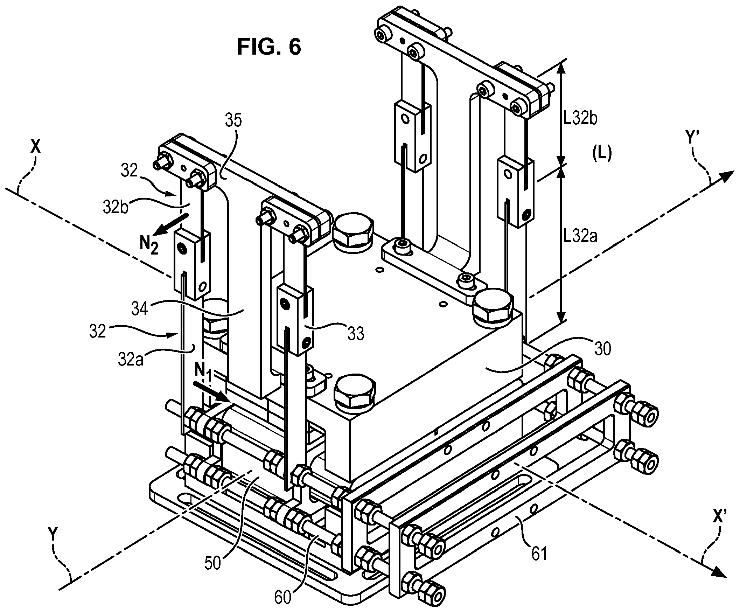

Un mode de réalisation détaillé d'un actionneur 10 est présenté en **figures 5****,** **6****.** Ce mode de réalisation détaille notamment comment la bobine 50 est maintenue en place par rapport au carter 30. De plus, ce mode de réalisation décrit comment la translation de la bobine 50 est permise, et donc *in fine,* la translation de l'échantillon 20. Comme mentionné précédemment, cette translation est sensiblement dans un plan XY correspondant aux translations selon la direction principale X-X' et selon la direction, ici orthogonale, Y-Y'.
Sur ces figures, l'aimant 40 est représenté comme comprenant un pôle nord 40a et un pôle sud 40b.

L'actionneur 10 comprend un jeu de lames souples 32 fixé au carter 30 et portant la bobine 50. Le jeu de lames souples 32 peut porter la bobine 50 *via* les moyens de supports 60. Ces lames souples 32 permettent de maintenir la bobine 50 en place tout en autorisant ses translations du fait de la souplesse des lames 32. Pour cela, le jeu de lames souples 32 comprend un axe présentant une première partie 32a dont la normale N₁ à la surface est orientée selon la direction principale X-X'. Ainsi, la flexion de la première partie 32a se fait selon cette direction X-X' et permet la translation.

Pour autoriser la translation selon la direction orthogonale Y-Y' à la direction principale X-X', l'axe du jeu de lames 32 comprend une deuxième partie 32b dont la normale N₂ à la surface est orientée selon ladite direction orthogonale Y-Y'. Le principe est similaire : la flexion de cette deuxième partie 32b se fait selon cette direction Y-Y' et autorise la translation.
Les deux parties 32a, 32b sont disposées en série.

Alternativement, pour le cas où on veut coupler deux actionneurs ensemble, on peut envisager de mettre deux ou plus de deux lames en série avec des normales orientées de moins de 90° les unes par rapport aux autres. La fonction du jeu de lames 32 est de permettre une translation dans le plan XY. En revanche, l'avantage de deux lames 32a, 32b à 90° réside dans l'indépendance des translations : la flexion d'une lame n'influe pas sur celle de l'autre.

Les dimensions du jeu de lames 32 par rapport à l'amplitude de la translation permettent de négliger la courbure de la trajectoire de la bobine 50 due à la flexion de jeu de lames souples 32. Le fait d'avoir deux jeux de lames 32 au minimum et du même côté de la bobine 50 supportant la bobine 50 et se déplaçant dans le même sens permet d'approximer un mouvement de translation, et non de rotation, pour des petits déplacements.
Alternativement, la bobine 50 peut être solidaire par une liaison glissière. Les jeux de lames 32 ne sont alors plus nécessaires. Néanmoins, la solution avec les jeux de lames 32 permet d'éviter les frottements et l'alourdissement de l'actionneur 10.

Plus précisément, les deux parties 32a, 32b sont alignées et solidaires grâce à un élément de fixation 33 sous forme d'une pièce métallique présentant deux encoches en extrémités opposées disposées à 90° et pouvant accueillir respectivement deux extrémités des deux parties 32a, 32b.
Une extrémité de la première partie 32a est solidaire de la bobine 50 ou des moyens de support 60 et la deuxième partie 32b est solidaire du carter 30.
L'amplitude de la translation selon la direction principale X-X' pouvant être identique à celle selon la direction orthogonale Y-Y'. La longueur L32a de la première partie 32a est préférablement plus importante que celle L32b de la deuxième partie 32b. La distance entre le point fixe sur son support 35 et le point d'accrochage sur la bobine ou le support 60 fait qu'une faible déflection en haut de la lame 32b se traduit par effet levier par une déflection plus important au niveau de l'accrochage sur le support 60 permettant une amplitude en flexion dans la direction X-X' similaire à celle dans la direction Y-Y'.
En outre, pour autoriser une amplitude de translation suffisante sans compromettre l'intégrité du jeu de lames 32 en fléchissant les lames au-delà de leur valeur de flexion élastique, la longueur du jeu de lames 32 doit être ajustée pour autoriser les translations voulues (voir **figure 6**). Ainsi des éléments de raccords 34, 35 sont intégrés pour solidariser le jeu de lames 32 audit carter 30. Ces éléments de raccords peuvent prendre la forme d'un pied 34 fixé au carter 30 et s'étendant selon une direction suffisante pour permettre d'être attaché à une extrémité de la deuxième partie 32b. Une âme 35 permet d'assurer cette liaison entre le pied 34 et l'extrémité de la deuxième partie 32b.
Le pied 34 est rigide.

Pour garantir la translation de la bobine 50, plusieurs jeux de lames souples 32 sont prévus : comme mentionné précédemment, le minimum pour avoir une translation étant de deux jeux de lames 32 souples fléchissant dans la même direction et disposées dans un plan parallèle à la direction de translation X-X' ou Y-Y'. Il faut aussi, vu le poids de la bobine 50, la soutenir au moins des deux côtés afin de ne pas introduire de moment dans les lames 32a, 32b, qui pourraient alors fléchir sous le poids de l'actionneur. On arrive donc à un nombre minimum de quatre jeu de lames 32 (comme représenté sur les **figures 5****,** **6****).** Plus on augmente le nombre de jeux de lames 32, plus on augmente l'effort à vaincre pour déplacer la bobine 50.
Dans le cas de quatre jeux de lames souples 32, un jeu de lames souples 32 est présent aux environs de chaque angle du parallélépipède que forme la bobine 50. Pour des raisons de simplifications, le pied 34 peut solidariser deux jeux de lames 32 du même côté *via* l'âme 35.

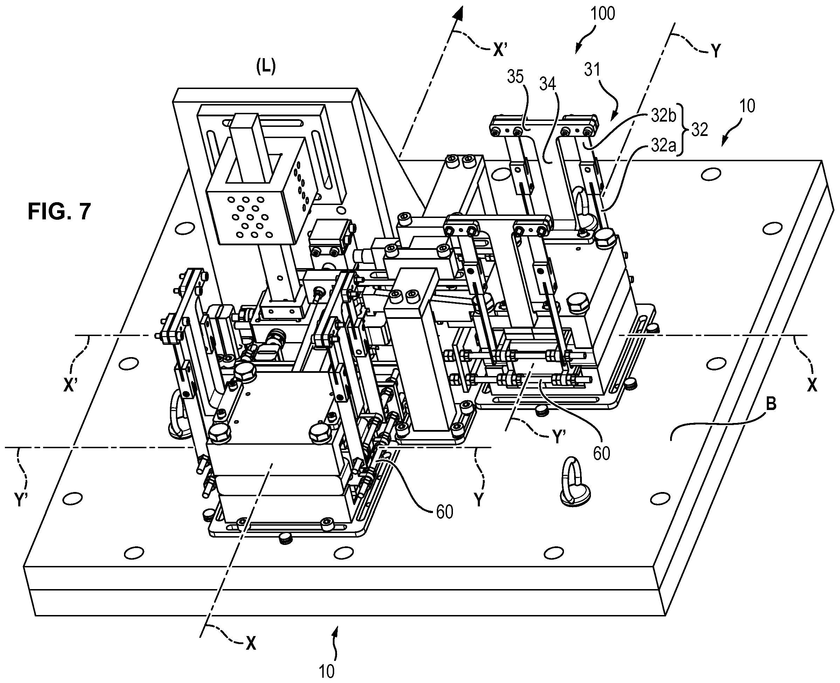

Au niveau des moyens de supports 60, qui transmettent l'effort, des renforts 61 peuvent être prévus pour maintenir le parallélisme et solidariser lesdits moyens.
Les moyens de supports 60 sont réalisés préférablement sous forme de tiges métalliques pour limiter leur masse. L'ensemble constitué par les supports 60 et les renforts 61 peut prendre des formes différentes suivant l'optimisation en termes de rigidité et de masse que l'on souhaite obtenir. Les figures 6 et 7 décrivent un exemple particulier de réalisation tenant compte des contraintes de liaison des supports 60 avec l'échantillon 20.
Deux tiges de chaque côté de la bobine 50, soit quatre, conviennent. Dans ce cas, les renforts 61 peuvent prendre la forme d'un ou plusieurs cadres parallèles entre eux, solidaire des quatre tiges.

L'actionneur 10 permet la translation selon la direction principale X-X' et autorise une translation selon la direction orthogonale Y-Y'. Pour que l'échantillon puisse être déplacé dans un plan, il est prévu dans l'enceinte E, en référence à la **figure 7****,** un multi-actionneur 100 comprenant au moins deux actionneurs 10 tels que décrits auparavant. Les deux actionneurs déplacent le même échantillon 20 et ne sont pas parallèles, dans le sens où leurs directions principales respectives X-X' ne sont pas parallèles.
Un mode particulier de disposition est celui où les actionneurs 10 sont disposés orthogonalement.

Pour la suite de la description, on suppose deux actionneurs 10 vérifiant cette condition d'orthogonalité. Les actionneurs sont fixés au bâti B.
De cette façon, la direction principale X-X' d'un actionneur 10 correspond à la direction orthogonale Y-Y' de l'autre. Du fait de la solidarité respective des moyens de supports 60 de chacun des actionneurs avec l'échantillon 20, lorsqu'un actionneur 10 se déplace selon sa direction principale X-X', il provoque la translation de l'autre actionneur 10 selon sa direction orthogonale Y-Y'.

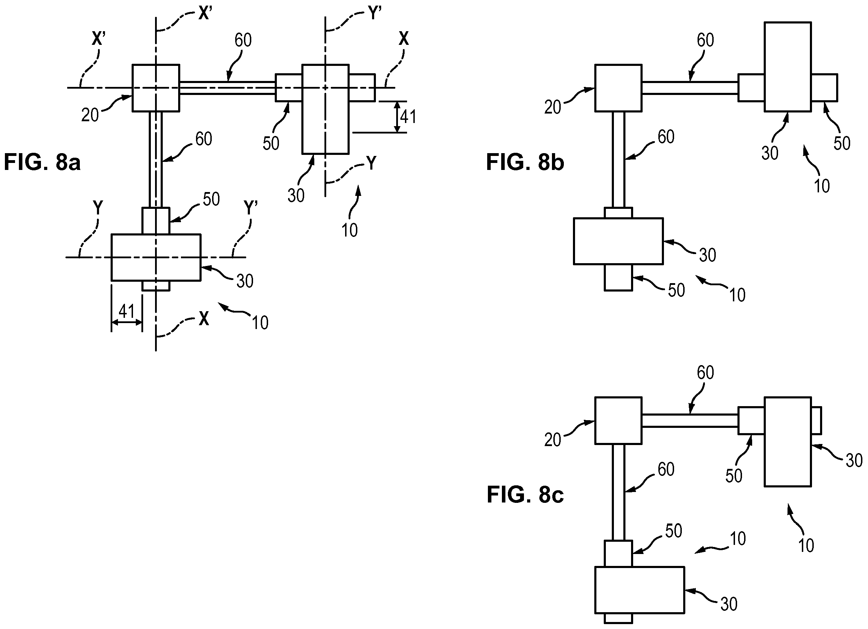

Les **figures 8a à 8c** illustrent différentes configurations possibles (illustration non à l'échelle et bobine 50 dont la dimension longitudinale est supérieur à celle du carter 30, de façon à pouvoir illustrer leur déplacement) :
- Sur la **figure 8a****,** un des deux actionneurs 10 a déplacé (en poussant) l'échantillon 20 selon sa direction principale X-X', ce qui a provoqué une translation selon la direction transversale Y-Y' de la bobine 50 de l'autre actionneur 10 ;
- Sur la **figure 8b****,** il s'agit de la même configuration sauf que l'actionneur 10 a tiré l'échantillon 20 vers lui ;
- Sur la **figure 8c****,** les deux actionneurs 10 ont poussé l'échantillon 20, par conséquent les deux bobines 50 ont subi une translation selon leur direction transversale Y-Y'.

Cette architecture et cette chaine de transmission d'efforts est permise grâce à l'architecture des actionneurs 10 précédemment décrits.

L'actionneur 10 ou le multi-actionneur 100 est immergé dans le fluide L qui est à une température d'environ 350°C. Cette température élevée d'utilisation provoque une complexification de l'actionneur, dans la mesure où ce dernier doit pouvoir résister sur le long terme.
Afin de limiter la température, un mode de réalisation comprend, au niveau de l'enceinte E, une alimentation 70 en fluide dont la température est inférieure à celle du fluide à proximité de l'échantillon 20. Cette alimentation est positionnée à proximité de l'actionneur 10 pour faire baisser la température dans son environnement proche.
Le câble d'alimentation de l'actionneur 10 est aussi avantageusement disposé dans la zone couverte par l'alimentation.
Néanmoins, pour ne pas que cette alimentation de fluide plus froid perturbe les essais, un isolant thermique est positionné entre l'actionneur 10 et l'échantillon 20.
L'alimentation permet de faire baisser la température autour de l'actionneur dans des environs de 100°C.
L'alimentation en fluide plus froid ne nécessite pas particulièrement d'éloigner plus l'actionneur 10 de l'échantillon 20. En effet, l'isolant a une épaisseur assez faible (de 1 à 2 cm) et peut être encore plus fin en fonction des caractéristiques souhaitées.
Un autre mode de réalisation consiste avec la même géométrie décrite au paragraphe précédent à injecter le fluide chaud au centre (entrée 80a, sortie 80b), à ne pas isoler l'extérieur de l'enceinte, le gradient thermique naturel qui va s'établir radialement permet d'obtenir les 320°C auprès de l'échantillon, un fort gradient dans l'isolation, puis une température proche des 100°C au niveau de l'actionneur.

## Revendications

1. Actionneur magnétique (10) pour mise en mouvement maîtrisé d'un d'échantillon (20) pour analyse dans un milieu liquide (L) sous haute pression et haute température, ou sous haute pression, comprenant :
- Un carter (30),
- Un aimant permanent (40) générant un champ magnétique (B), l'aimant (40) étant fixé sur le carter (30) et comprenant un entrefer,
- Une bobine (50), pouvant être alimentée en courant électrique (i), de sorte que ladite bobine (50) puisse se déplacer en translation dans l'entrefer selon une direction principale (X-X'),
- Des moyens de supports (60), solidaires de la bobine (50), auxquels est attaché l'échantillon (20),
**caractérisé en ce que** l'aimant (40) et la bobine (50) sont adaptés pour être immergés dans le milieu liquide (L), de sorte que la pression du milieu s'exerce de manière isostatique sur tous les composants de l'actionneur (10).

2. Actionneur selon la revendication 1, dans lequel l'aimant (40) et/ou la bobine est recouvert d'un revêtement spécial pour résister à la corrosion du milieu liquide (L).

3. Actionneur selon l'une des revendications 1 à 2, dans lequel le carter (30) comprend un jeu de lames souples (32) fixé au carter (30) et portant la bobine (50), ledit jeu autorisant la translation de la bobine (50) selon la direction principale (X-X').

4. Actionneur selon la revendication précédente, dans lequel le jeu de lames souples (32) autorise la translation de la bobine (50) selon une direction orthogonale (Y-Y') à la direction principale (X-X'), de sorte que la bobine (50) puisse se déplacer par translation sensiblement dans un plan (XY).

5. Actionneur selon les revendications 2 à 4 dans lequel le jeu de lames souples (32) comprend un axe dont :
- une première partie (32a) est une lame dont la normale (N₁) est orientée selon la direction principale (X-X') et
- une deuxième partie (32b) dont la normale (N₂) est orientée à 90° selon une direction orthogonale (Y-Y') à la direction principale (X-X'),
de sorte que les parties (32a, 32b) autorisent la translation respectivement dans la direction de leur normale (N₁, N₂), par souplesse des lames.

6. Actionneur selon l'une revendication précédente, dans lequel l'entrefer selon la direction orthogonale (Y-Y') est dimensionné pour permettre un déplacement de la bobine (50) selon cette direction (Y-Y').

7. Multi-actionneur (100) pour analyse d'échantillons (20) dans un milieu liquide (L) sous haute pression et haute température, comprenant au moins deux actionneurs (10) selon l'une des revendications précédentes, les deux actionneurs (10) étant adaptés pour agir sur un même échantillon (20) et étant non parallèles l'un par rapport à l'autre.

8. Multi-actionneur selon la revendication précédente, dans lequel les directions principales (X-X') de chacun des actionneurs (10) sont orthogonales.

9. Multi-actionneur selon les revendications 7 ou 8, dont les actionneurs (10) sont conformes à la revendication 4, dans lequel la translation de la bobine (50) selon la direction principale (X-X') d'un actionneur (10) provoque la translation selon la direction orthogonale (Y-Y') à la direction principale (Y-Y') de l'autre actionneur (10).

10. Enceinte (E) de test pour échantillon (20) **caractérisée en ce qu'**elle comprend un actionneur (10) selon l'une des revendications 1 à 6 ou un multi-actionneur (100) selon l'une des revendications 7 à 9, dans lequel l'enceinte (E) est remplie de fluide (20) sous une pression supérieure à 50 bars et d'une température supérieure à 200°C.

11. Enceinte (E) selon la revendication précédente, comprenant en outre une alimentation en fluide de température inférieure à proximité de l'actionneur (10) ou du multi-actionneur (100), afin de faire baisser la température environnante et comprenant un isolant thermique permettant de limiter les échanges thermiques à proximité de l'échantillon testé (20).

12. Enceinte (E) selon la revendication précédente, comprenant un isolant thermique permettant de limiter les échanges thermiques à proximité de l'échantillon testé (20), afin de faire baisser la température environnante hors de cet isolant.

## Patentansprüche

1. Magnetisches Stellglied (10) für das beherrschte Versetzen in Bewegung einer Probe (20) für Analyse in einem flüssigen Medium (L) unter hohem Druck und hoher Temperatur oder unter hohem Druck, umfassend:
- ein Gehäuse (30),
- einen Dauermagneten (40), welcher ein Magnetfeld (B) erzeugt, wobei der Magnet (40) auf dem Gehäuse (30) befestigt ist und einen Spalt umfasst,
- eine Spule (50), die derart mit elektrischem Strom (i) versorgbar ist, dass sich die Spule (50) im Spalt gemäß einer Hauptrichtung (X-X') verschiebend verlagern kann,
- Tragemittel (60), die mit der Spule (50) fest verbunden sind, an denen die Probe (20) befestigt ist,
**dadurch gekennzeichnet, dass** der Magnet (40) und die Spule (50) ausgebildet sind, um in das flüssige Medium (L) eingetaucht zu sein, so dass der Druck des Mediums auf alle Komponenten des Stellglieds (10) isostatisch wirkt.

2. Stellglied nach Anspruch 1, wobei der Magnet (40) und/oder die Spule mit einer Spezialbeschichtung beschichtet ist/sind, um der Korrosion des flüssigen Mediums (L) zu widerstehen.

3. Stellglied nach einem der Ansprüche 1 bis 2, wobei das Gehäuse (30) ein Set elastischer Zungen (32) umfasst, das an dem Gehäuse (30) befestigt ist und die Spule (50) trägt, wobei das Set die Verschiebung der Spule (50) gemäß der Hauptrichtung (X-X') erlaubt.

4. Stellglied nach vorangehendem Anspruch, wobei das Set elastischer Zungen (32) die Verschiebung der Spule (50) gemäß einer zur Hauptrichtung (X-X') orthogonalen Richtung (Y-Y') erlaubt, so dass sich die Spule (50) durch Verschieben etwa in einer Ebene (XY) verlagern kann.

5. Stellglied nach den Ansprüchen 2 bis 4, wobei das Set elastischer Zungen (32) eine Achse umfasst, mit:
- einem ersten Teil (32a), der eine Zunge ist, deren Normale (N₁) gemäß der Hauptrichtung (X-X') ausgerichtet ist, und
- einem zweiten Teil (32b), dessen Normale (N₂) in 90° gemäß einer zur Hauptrichtung (X-X') orthogonalen Richtung (Y-Y') ausgerichtet ist,
so dass die Teile (32a, 32b) die Verlagerung jeweils in Richtung ihrer Normalen (N₁, N₂) mittels der Elastizität der Zungen erlauben.

6. Stellglied nach einem vorangehenden Anspruch, wobei der Spalt gemäß der orthogonalen Richtung (Y-Y') bemessen ist, um eine Verlagerung der Spule (50) in dieser Richtung (Y-Y') zu erlauben.

7. Multi-Stellglied (100) für Analyse von Proben (20) in einem flüssigen Medium (L) unter hohem Druck und hoher Temperatur, umfassend mindestens zwei Stellglieder (10) nach einem der vorangehenden Ansprüche, wobei die zwei Stellglieder (10) ausgebildet sind, um auf eine selbe Probe (20) zu wirken und nicht parallel zueinander sind.

8. Multi-Stellglied nach vorangehendem Anspruch, wobei die Hauptrichtungen (X-X') jedes Stellglieds (10) orthogonal sind.

9. Multi-Stellglied nach den Ansprüchen 7 oder 8, dessen Stellglieder (10) Anspruch 4 entsprechen, wobei die Verschiebung der Spule (50) gemäß der Hauptrichtung (X-X') eines Stellglieds (10) zur Verschiebung gemäß der zur Hauptrichtung (Y-Y') orthogonalen Richtung (Y-Y') des anderen Stellglieds (10) führt.

10. Testbehälter (E) für Probe (20), **dadurch gekennzeichnet, dass** er ein Stellglied (10) nach einem der Ansprüche 1 bis 6 oder ein Multi-Stellglied (100) nach einem der Ansprüche 7 bis 9 umfasst, wobei der Behälter (E) mit Fluid (20) unter einem Druck über 50 bar und einer Temperatur über 200 °C gefüllt ist.

11. Behälter (E) nach vorangehendem Anspruch, umfassend ferner eine Versorgung mit Fluid niedriger Temperatur in der Nähe des Stellglieds (10) oder des Multi-Stellglieds (100), um die Umgebungstemperatur zu senken, und umfassend eine thermische Isolation, die erlaubt, die thermischen Austausche in der Nähe der getesteten Probe (20) zu begrenzen.

12. Behälter (E) nach vorangehendem Anspruch, umfassend eine thermische Isolation, die erlaubt, die thermischen Austausche in der Nähe der getesteten Probe (20) zu begrenzen, um die Umgebungstemperatur außerhalb dieser Isolation zu senken.

## Claims

1. A magnetic actuator (10) for controlled setting into motion a sample (20) for analysis in a liquid medium (L) under high pressure at a high temperature, or under high pressure, comprising:
- a casing (30),
- a permanent magnet (40) generating a magnetic field (B), the magnet (40) being attached on the casing (30) and comprising an air gap,
- a coil (50), which may be supplied with electric current (i), so that said coil (50) may translationally move in the air gap according to a main direction (X-X'),
- supporting means (60), secured to the coil (50), to which is attached the sample (20),
**characterized in that** the magnet (40) and the coil (50) are adapted so as to be immersed in the liquid medium (L), so that the pressure of the medium is exerted isostatically on all the components of the actuator (10).

2. The actuator according to claim 1, wherein the magnet (40) and/or the coil is covered with a special coating for resisting to corrosion of the liquid medium (L).

3. The actuator according to one of claims 1 to 2, wherein the casing (30) comprises a set of flexible blades (2) attached to the casing (30) and bearing the coil (50), said set authorizing the translation of the coil (50) according to the main direction (X-X').

4. The actuator according to the preceding claim, wherein the set of flexible blades (32) authorizes the translation of the coil (50) according to a direction orthogonal (Y-Y') to the main direction (X X'), so that the coil (50) may be moved by translation substantially in a plane (XY).

5. The actuator according to claims 2 to 4, wherein set of flexible blades (32) comprises an axis of which:
- a first portion (32a) is a blade, the normal (N₁) of which is oriented according to the main direction (X-X') and
- a second portion (32b), the normal (N₂) of which is oriented at 90° according to a direction orthogonal (Y-Y') to the main direction (X-X'),
so that the portions (32a, 32b) authorize translation respectively in the direction of their normal (N₁, N₂) by flexibility of the blades.

6. The actuator according to one of the preceding claims, wherein the air gap according to the orthogonal direction (Y-Y') is dimensioned for allowing displacement of the coil (50) according to this direction (Y-Y').

7. A multi-actuator (100) for analysis of samples (20) in a liquid medium (L) under high pressure and at a high temperature, comprising at least two actuators (10) according to one of the preceding claims, both actuators (10) being adapted for acting on a same sample (20) and being non parallel relatively to each other.

8. The multi-actuator according to the preceding claim, wherein the main directions (X-X') of each of the actuators (10) are orthogonal.

9. The multi-actuator according to claims 7 or 8, wherein the actuators (10) are according to claim 4, wherein the translation of the coil (50) according to the main direction (X-X') of an actuator (10) causes the translation according to the direction (Y-Y') orthogonal to the main direction (Y-Y') of the other actuator (10).

10. A test enclosure (E) for a sample (20), **characterized in that** it comprises an actuator (10) according to one of claims 1 to 6 or a multi-actuator (100) according to one of claims 7 to 9, wherein the enclosure (E) is filled with fluid (20) under a pressure greater than 50 bars and at a temperature greater than 200 °C.

11. The enclosure (E) according to the preceding claim, further comprising a lower temperature fluid supply in proximity to the actuator (10) or the multi-actuator (100), in order to lower the surrounding temperature and comprising a heat insulator giving the possibility of limiting the heat exchanges in proximity to the tested sample (20).

12. The enclosure (E) according to the preceding claim, comprising a heat insulator giving the possibility of limiting the heat exchanges in proximity to the tested sample (20), in order to lower the surrounding temperature out of this insulator.
